# DEMANDE DE BREVET EUROPEEN

(11) **EP 1 378 399 A1**
(43) Date de publication de la demande: **07.01.2004**
(21) Numéro de dépôt: 03291490.5
(22) Date de dépôt: 19.06.2003
(51) Int. Cl.: B60R 13/08

(54) **Assemblage d'isolation acoustique destiné à être monté dans une pièce de châssis creux**

(30) Priorité: 03.07.2002 FR 0208297
(71) Demandeur: LE JOINT FRANCAIS, 75008 Paris (FR)
(72) Inventeur: Mourieras, Maxime, 92500 Rueil Malmaison (FR); Aube, Gérard, 78500 Sartrouville (FR)
(74) Mandataire: Schwartz, Thierry J.

(57) **Abrégé**

L'invention vise à résoudre le problème d'isolation acoustique de pièces tubulaires quelle que soit la forme de la section de la pièce à isoler, sans l'utilisation d'insert d'un coût économique élevé.

A cet effet, l'invention propose d'utiliser un morceau de matériau apte à s'expanser sur toute la section de la section, et monté sur un support pouvant se fixer sur la paroi du tube à isoler.

Selon un exemple de réalisation, un assemblage d'isolation acoustique monté dans une pièce (K) présentant une direction longitudinale et une paroi tubulaire (1), comprend une tranche (13) expansible par voie thermique pour former une mousse, cette tranche présentant deux faces principales parallèles (13f) et s'étendant essentiellement selon un plan principal à partir d'une première portion de paroi (1i) et en direction de la portion de paroi diamétralement opposée, ainsi qu'un support de tranche comportant une pince de retenue de la tranche (11) avant expansion couplés à des moyens de fixation sous forme d'un clip (12) sur la première portion de paroi (1i) de la pièce.

## Description

L'invention concerne un assemblage d'isolation acoustique destiné à être monté dans une pièce tubulaire, ainsi que la pièce tubulaire équipée d'au moins un tel assemblage, en particulier une pièce de carrosserie automobile.

Une carrosserie d'automobile, en particulier sa caisse, comprend notamment des pièces tubulaires, telles des montants de baie, des longerons, etc., qui constituent des voies de passage importantes pour la propagation et la remontée de bruits divers jusqu'à l'habitacle du véhicule, ce qui nuit au confort des passagers.

L'isolation acoustique de ces pièces tubulaires pose donc un problème, sachant par ailleurs que ces pièces ont des formes diverses avec des sections variables, et peuvent être constituées d'un assemblage de plusieurs pièces.

Pour limiter la propagation de ces bruits, les constructeurs automobiles pratiquent depuis longtemps une obturation de la section intérieure des pièces tubulaires par injection locale d'une composition expansible par voie chimique et destinée à créer un bouchon de mousse qui vient au contact de la paroi interne des pièces pour former au moins une cloison d'isolation acoustique.

L'injection de la mousse est effectuée au travers d'un trou percé dans la pièce, après la mise en peinture de la caisse du véhicule. Cette solution s'applique dans le cas où la pièce (ou la partie de pièce), dans laquelle on désire implanter la cloison, est un tube à section droite, sensiblement circulaire, et de diamètre relativement faible.

Cependant, cette solution nécessite l'utilisation d'un matériel spécifique pour l'injection de la mousse.

On connaît du document US-A-5,642,914 un dispositif d'isolation acoustique comprenant un matériau expansible par voie thermique qui se présente globalement sous la forme d'un anneau plat rapporté sur le pourtour d'un insert de cloisonnement. Cet anneau est obtenu par extrusion ou par moulage en lui donnant la forme du contour de l'insert de cloisonnement.

On connaît également du document WO 01/83206 un dispositif d'isolation acoustique où le matériau expansible par voie thermique est moulé sur le pourtour d'un insert de cloisonnement ou se présente sous la forme d'une bande ou d'un cordon qui est fixé sur le pourtour dudit insert par collage ou au moyen d'agrafes.

L'invention vise à résoudre le problème d'isolation acoustique de pièces tubulaires quelle que soit la forme de la section de la pièce à isoler, sans nécessiter l'utilisation d'un insert d'un coût économique élevé. De plus, la dépose d'un cordon autour de l'insert entraîne la mise en place d'installations supplémentaires, donc un surcoût.

A cet effet, l'invention propose d'utiliser un morceau de matériau apte à s'expanser sur toute la section de la section, et monté sur un support pouvant se fixer sur la paroi du tube à isoler.

Plus précisément, l'invention a pour objet un assemblage d'isolation acoustique destiné à être monté dans une pièce présentant une direction longitudinale et une paroi tubulaire. Cet assemblage comprend un morceau de matière expansible par voie thermique pour former une mousse, apte à combler la section de passage de la pièce une tranche expansible par voie thermique pour former une mousse.

Avantageusement, ce morceau est conformé selon sous la forme d'une tranche présentant deux faces principales parallèles et s'étendant essentiellement selon un plan principal à partir d'une première portion de paroi et en direction de la portion de paroi diamétralement opposée, de préférence jusqu'à environ un quart à environ la moitié de la distance séparant les deux portions, ainsi qu'un support de tranche comportant des moyens de retenue de la tranche avant expansion couplés à des moyens de fixation sur la première portion de paroi de la pièce.

Avantageusement, la tranche expansible est obtenue par découpage d'une plaque fabriquée par extrusion à partir d'une composition de mastic à base de caoutchouc synthétique vulcanisable du type butyle et/ou butyle halogéné ou nitrile, en polychloroprène, en EPDM par exemple, et d'un agent gonflant, sachant que l'on peut également faire varier le taux d'expansion ou de gonflement de la tranche au cas par cas, en fonction de l'espace à combler dans la pièce tubulaire en faisant varier les proportions des constituants du mastic. De préférence, le taux d'expansion est de 200 à 300% selon le plan principal, et de 400 à 600% selon la direction orthogonale à ce plan.

Selon des modes de réalisation particuliers, la tranche étant montée transversalement à la pièce tubulaire ou longitudinalement le long de l'axe de cette pièce :
- les moyens de fixation sont formés par une plaque à clipper, à sertir ou à coller contre la paroi interne de la pièce tubulaire, ou encore par un clip formé d'au moins un bras support terminé par des pattes flexibles, le clip étant engagé dans une ouverture formée dans la paroi de la pièce tubulaire ;
- les moyens de retenue sont constitués par une pince formée de crochets qui pénètrent dans la tranche, de lames élastiques de pincement des faces de la tranche ou encore de moyens de clippage de forme similaire à celle des moyens de fixation ;
- les crochets ou lames élastiques de la pince sont disposés alternativement de part et d'autre de la tranche ;
- le couplage entre les moyens de retenue et de fixation est réalisé par une gouttière de liaison, lorsque les moyens de retenue sont constitués par des lames flexibles, ou par des fourches de support, lorsque les moyens de retenue sont constitués par des crochets ou des clips, montés sur ces fourches ;
- un détrompage est prévu lorsque les moyens de fixation et les moyens de retenue sont constitués par deux moyens de clippage, ce détrompage consistant à réaliser des clips de retenue de dimensions sensiblement inférieures à celles des clips de fixation, avec éventuellement une tige de connexion de dimension, par exemple de diamètre ou de côté, sensiblement inférieure à celle du bras du clip de fixation ;
- le support de tranche est formé par une languette d'adhésif ayant les mêmes constituants que la tranche expansible, additionnés d'une résine de type phénolique ou équivalent, par exemple une résine époxyde, les composants étant pris dans des proportions adaptées pour former un matériau flexible et apte à adhérer, à la fois, à la tranche expansible et à la face interne de la paroi de la pièce tubulaire ;
- la languette d'adhésif a soit une forme en « T », par repli sur elle-même, la tranche expansible étant collée sur le pied du « T » ou encastrée dans ce pied, soit une forme en équerre et le collage est réalisé entre la tranche et, de préférence, une ou deux équerres, soit une forme de plaquette pour former une jonction entre la tranche expansible et la paroi de la pièce, avec ou sans ergots de matériau expansible pour consolider le maintien de la tranche sur la plaquette d'adhésif.

D'une manière générale, la tranche se présente sous la forme d'un disque ou d'un rectangle, de diamètre, respectivement de côté, égal à environ la moitié de celui de la pièce tubulaire.

Selon d'autres modes de réalisation, le support de tranche est réalisé par moulage d'une préforme métallique ou par moulage par injection d'un matériau thermoplastique. Dans ce cas, les moyens de retenue et de fixation viennent de moulage avec les éléments de connexion.

Un assemblage d'isolation acoustique selon l'invention offre également l'avantage de s'affranchir de la dépose de mastic gonflant sur un insert.

L'invention a également pour objet une pièce tubulaire, en particulier une pièce de carrosserie automobile, équipée d'au moins un assemblage d'isolation acoustique ayant tout ou partie des caractéristiques précitées, l'expansion de la tranche par voie thermique s'effectuant au cours de la mise en peinture de la pièce.

D'autres avantages, caractéristiques et détails de l'invention ressortiront du complément de description qui suit, en référence à des dessins annexés, donnés uniquement à titre d'exemple et qui représentent :
- la figure 1, une vue en coupe longitudinale schématique d'un premier exemple de réalisation d'assemblage d'isolation acoustique dans un tube, selon l'invention, cet assemblage comprenant notamment une pince de retenue à crochets et un clip de fixation ;
- la figure 2, une vue en perspective d'un deuxième exemple comportant une pince de retenue à lames et une plaque de fixation ;
- la figure 3, une vue en coupe longitudinale schématique d'un exemple d'assemblage comportant des moyens de retenue et de fixation formés de clips ;
- la figure 4, une vue analogue à la précédente après expansion de la tranche ;
- la figure 5, une vue en coupe longitudinale d'un exemple à support formé d'une languette d'adhésif repliée en T, sur laquelle la tranche vient adhérer ;
- les figures 6 et 7, une vue en coupe longitudinale schématique d'un exemple de support et une vue transversale selon le plan VII-VII de la figure 6, illustrant une variante de l'exemple précédent à tranche encastrée;
- les figures 8a et 8b, une vue en coupe longitudinale illustrant un autre exemple de réalisation d'un assemblage selon l'invention à simple et double équerre de languette d'adhésif ;
- la figure 9, une vue en coupe longitudinale d'un exemple de support formé d'une plaquette d'adhésif longitudinale ;
- les figures 10 et 11, des vues en perspective et en coupe longitudinale d'un exemple à tranche d'expansible consolidée par des ergots de maintien.

Des signes de référence identiques désignent des objets identiques d'une figure à une autre.

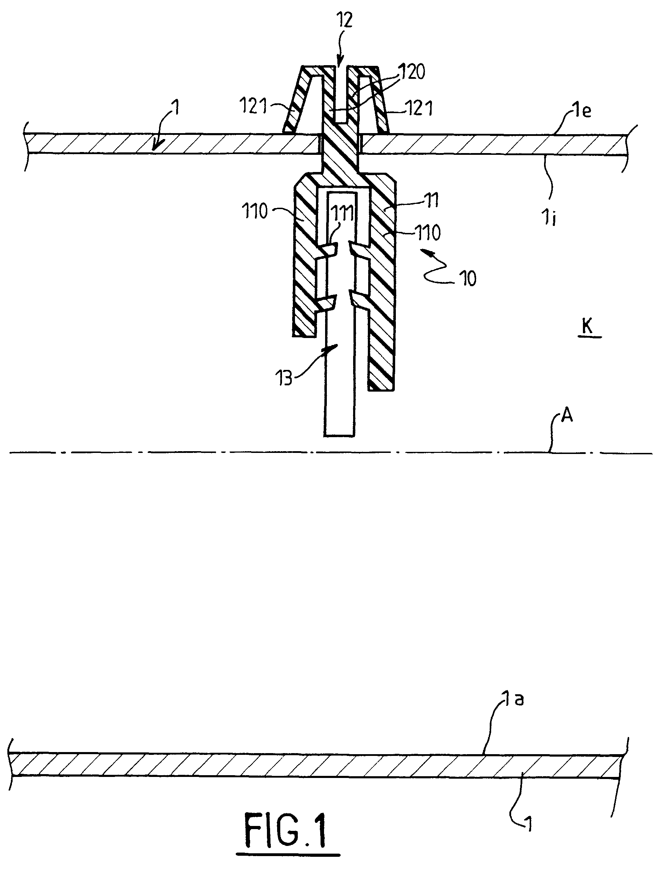

Un premier exemple de réalisation d'assemblage d'isolation acoustique 10 selon l'invention est illustré en figure 1. Cette figure est une vue en coupe longitudinale schématique, le long d'un tube k de caisse de véhicule de section sensiblement carrée d'environ 10 cm de côté.

L'assemblage est monté à l'intérieur du tube K d'axe longitudinal A, et il comprend notamment une pince de retenue 11 et un clip de fixation 12 sur la paroi de tôle 1 du tube. La pince est formée de deux fourches 110 munies de crochets 111 qui pénètrent dans les faces d'un morceau de matériau thermiquement expansible, en forme de tranche 13 dans l'exemple de réalisation. Les crochets et le clip peuvent être venus de moulage avec la pince et disposés de manière à permettre le démoulage sans problème de contre-dépouille.

La pince peut être en matériau thermoplastique suffisamment rigide pour positionner et maintenir en place la tranche 13. Ce matériau étant par exemple du polyamide, du polystyrène ou du polypropylène.

Le matériau apte à s'expanser thermiquement peut être composé d'un caoutchouc synthétique vulcanisable du type butyle, butyle halogéné ou nitrile, par exemple en polychloroprène ou en EPDM (terpolymère d'Ethylène - Propylène - Diène) dans lequel un agent gonflant a été ajouté pour former un mastic. La quantité d'agent gonflant est fonction du taux d'expansion souhaité. L'expansion à une température de l'ordre de 150°C à 200°C n'interviendra qu'ultérieurement, lors de l'opération de mise en peinture de la caisse du véhicule. Dans l'exemple, le taux d'expansion souhaité est d'environ 100 à 1000 %, de préférence de 300 à 500 %.

Le morceau 13 est obtenu par découpe d'une plaque fabriquée par extrusion du mastic, sous la forme d'un profilé de géométrie adaptée à la géométrie de la section des pièces à garnir, par exemple cylindrique ou rectangulaire. Dans l'exemple, la tranche se présente sous la forme d'un carré, d'épaisseur d'environ 5 mm et de côté égal à environ 4 cm.

La pince 11 est maintenue sur la paroi 1 par le clip de fixation 12, formé d'un double bras central 120 prolongé par deux pattes flexibles 121. Le clip 12 traverse la paroi 1 par une ouverture 2 préalablement formée dans la tôle d'épaisseur environ égale à 0,8 mm, puis les pattes 121 se déplient élastiquement contre la face externe 1e de la paroi 1. Le double bras central assure la liaison entre les fourches 110 de la pince et les pattes 121 du clip, de sorte que la naissance des fourches se situent à environ 1 à 2 mm de la face interne 1i de la paroi 1.

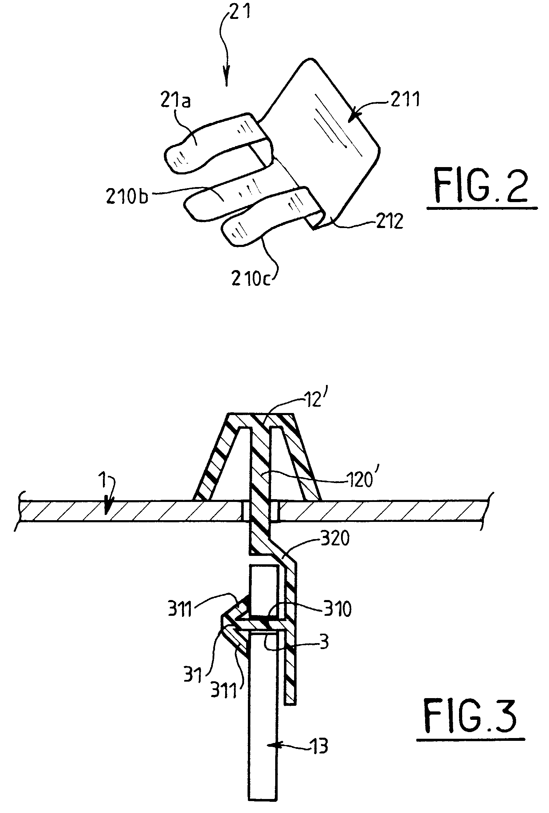

Selon une variante de réalisation, la retenue de la tranche est réalisée, comme illustré par la vue en perspective de la figure 2, par une pince 21 à trois lames élastiques, 210a à 210c, disposées alternativement de part et d'autre de la tranche expansible, et prolongée par une plaque de fixation 211 pouvant être clippée, collée ou sertie sur la paroi 1. La liaison entre les lames et la plaque est formée par une gouttière 212.

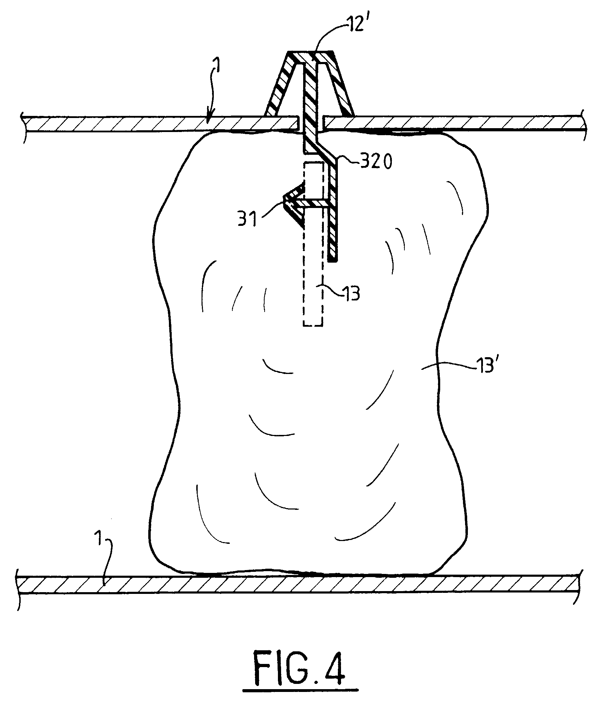

Selon un autre exemple, les moyens de retenue sont formés par un clip 31, comme illustré par la vue en coupe longitudinale schématique avant expansion sur la figure 3, et après expansion 13' sur la figure 4 de la tranche 13. Ce clip de retenue est formé de manière similaire au clip de fixation 12, mais avec une structure et des dimensions sensiblement réduites, tant au niveau de l'axe central 310, formé d'un unique bras, que des pattes flexibles 311. Le clip de retenue traverse une ouverture 3 pratiquée dans la tranche 13. Dans cet exemple, les moyens de fixation sont constitués par un clip 12', présentant des dimensions équivalentes à celles du clip de fixation 12 mais simplifié au niveau du bras central 120', car ce bras ne supporte plus deux fourches comme dans l'exemple précédent mais, à sa place, une seule tige de liaison 320, de dimension sensiblement inférieure au bras central.

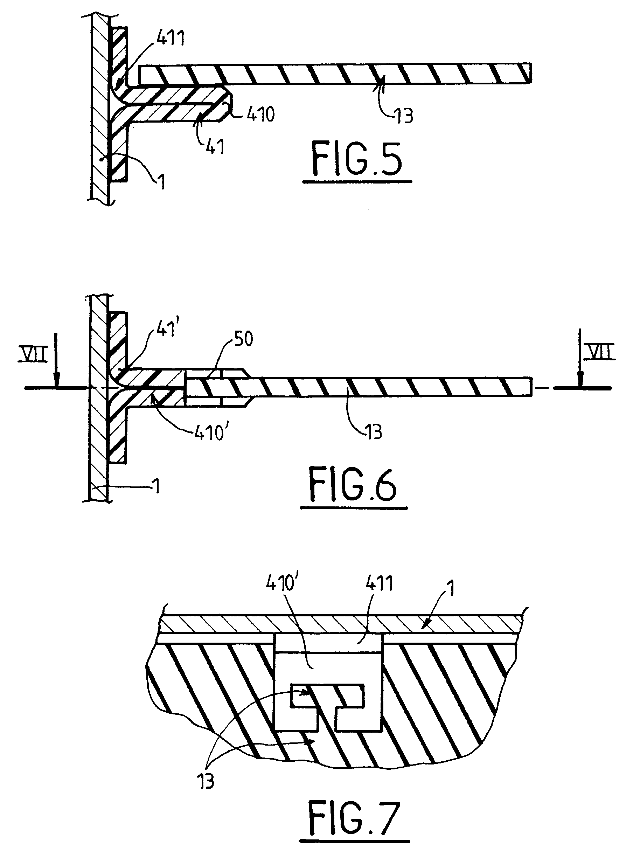

Selon un autre exemple de réalisation, tel qu'illustré en vue en coupe longitudinale selon la figure 5, les moyens de fixation et de retenue sont formés par un unique support. Ce support comporte une languette d'adhésif 41 repliée pour former un « T », composé d'un pied 410 et d'une tête 411. La tranche 13 est collée directement sur une face du pied 410. La tête 411 adhère à la face interne 1i de la paroil.

L'adhésif est composé des mêmes constituants que la tranche 13, avec des proportions identiques ou, avantageusement, adaptées pour obtenir une rigidité supérieure à celle de la tranche et un pouvoir adhésif élevé.

En variante, illustrée respectivement par des vues en coupe longitudinale et transversale sur les figures 6 et 7, la tranche 13 est encastrée dans le pied 410' du support 41'. Par découpage à l'emporte-pièce du pied 410, il est formé un orifice 50 (figure 7) en forme également de « T » ou équivalent, par exemple en étoile, dans lequel la plaque 13 vient s'encastrer. Toute autre forme permettant une incrustation solide, telle qu'en queue d'aronde ou en étoile, peut bien entendu être envisagée.

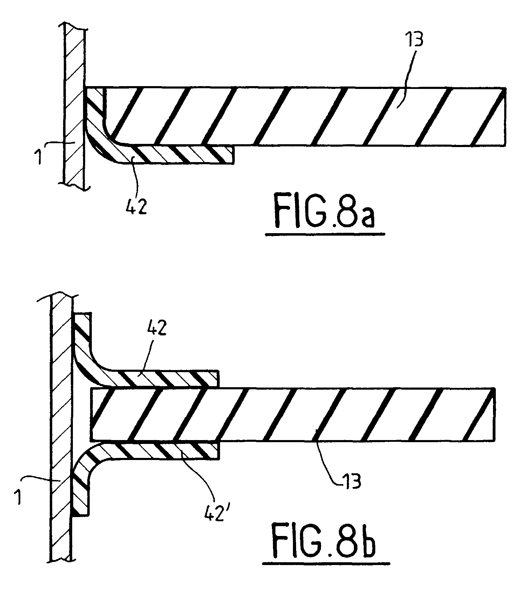

Selon une autre variante de réalisation, la languette d'adhésif est conformée en simple équerre 42 (figure 8a) entourant la tranche 13 sur un côté 13e et sur une face 13f de cette tranche. La partie linéaire la plus longue 420 de l'équerre supporte la tranche et l'autre partie linéaire 421 adhère à l'épaisseur 13e et à la face interne 1i de la paroi 1. Sur une arête de la tranche 13, il est réalisé un chanfrein 130, adapté pour épouser la courbure de la liaison entre les parties linéaires de la languette en équerre.

Alternativement (figure 8b), deux équerres 42 et 42', identiques à la précédente, prennent la tranche 13 en sandwich, les parties linéaires les plus longues 420 adhérant à la tranche 13 et les parties les plus courtes 421 adhérant sur la paroi 1.

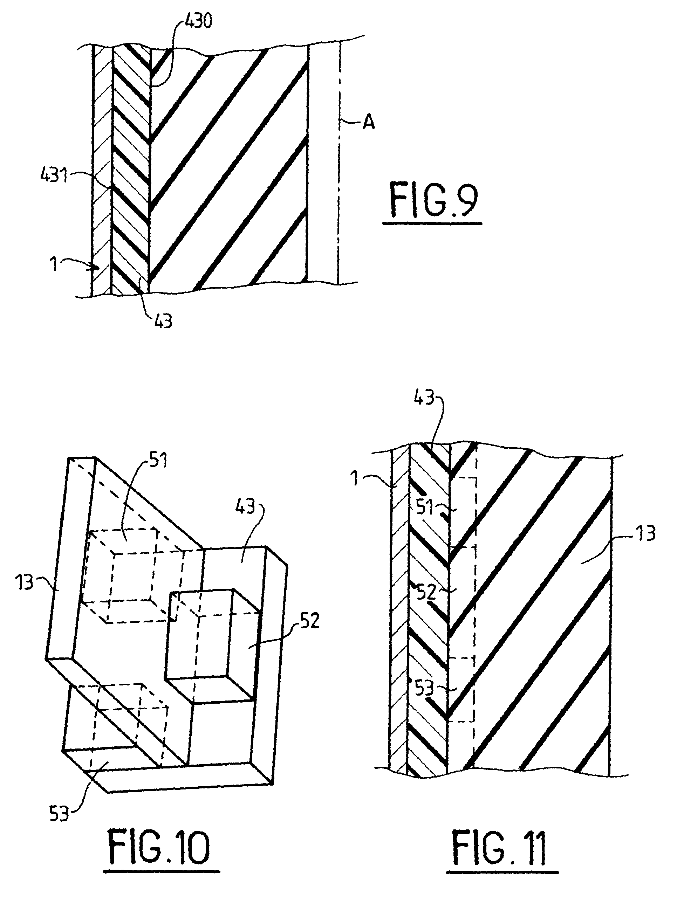

Selon un autre exemple de réalisation, illustré en figure 9, la languette d'adhésif se présente le long de l'axe A du tube K, sous forme de plaquette parallélépipédique 43. Une face 430 de cette plaquette vient adhérer sur la tranche d'expansible 13, disposée également longitudinalement, et l'autre face 431 adhère à la face interne 1i de la paroi 1.

En variante de la solution précédente, et comme illustré par les figures 10 et 11, respectivement en vues perspective et longitudinale, la tranche d'expansible 13 est consolidée par des ergots en matériau expansible, sous forme de dés 51 à 53 encollés sur la plaquette d'adhésif 43, afin de maintenir la tranche 13 en position.

L'invention n'est pas limitée aux exemples de réalisation décrits et représentés. Il est par exemple possible de prévoir un morceau de matériau expansible de forme diverse, par exemple munies d'excroissances longitudinales et/ou transversales. Des clips peuvent avoir un nombre de bras ou de pattes supérieur à 2, ainsi que des formes variées, par exemple des lamelles courbes et flexibles, pour réaliser le clippage. De plus, il est à noter que le taux d'expansion ou de gonflement de la plaque est fonction de l'espace à combler qui peut varier d'une pièce à l'autre avec des tolérances d'assemblage plus ou moins critiques.

## Revendications

1. Assemblage d'isolation acoustique destiné à être monté dans une pièce (K) présentant une direction longitudinale (A) et une paroi tubulaire (1), comportant :
- un morceau de matière expansible par voie thermique pour former une mousse, apte à combler la section de passage de la pièce (K) ; et
- un support, comportant :
- des moyens de retenue (11, 21, 31, 41, 42, 43) dudit morceau de matière expansible avant expansion ; et
- des moyens de fixation (12, 211) sur la première portion de paroi (1 i) de la pièce, couplés aux dits moyens de retenue (11, 21, 31, 41, 42, 43),
**caractérisé en ce que** ledit morceau de matière expansible est conformé sous la forme d'une tranche (13) présentant deux faces principales parallèles (13f) et s'étendant essentiellement selon un plan principal à partir d'une première portion de paroi (1i) en direction de la portion de paroi diamétralement opposée, et **en ce que** ledit support permet l'expansion de ladite tranche (13) dans toutes les directions.

2. Assemblage d'isolation acoustique selon la revendication précédente, dans lequel la tranche (13) s'étend essentiellement jusqu'à environ un quart à environ la moitié de la distance séparant les deux portions de paroi diamétralement opposées (1i, 1ii).

3. Assemblage d'isolation acoustique selon la revendication précédente, dans lequel la tranche (13) est montée soit transversalement à la pièce tubulaire soit longitudinalement selon l'axe (A) de cette pièce.

4. Assemblage d'isolation acoustique selon l'une quelconque des revendications précédentes, dans lequel les moyens de fixation sont formés par une plaque (211) à clipper, à sertir ou à coller contre la paroi interne (1i) de la pièce tubulaire (K).

5. Assemblage d'isolation acoustique selon la revendication précédente, dans lequel les moyens de retenue sont constitués par une pince (21) formée de lames élastiques (210a à 210c) de pincement des faces (13f) de la tranche (13).

6. Assemblage d'isolation acoustique selon la revendication précédente, dans lequel le couplage entre les moyens de retenue (210a à 210c) et de fixation (211) est formé par une gouttière de liaison (212).

7. Assemblage d'isolation acoustique selon l'une quelconque des revendications 1 à 3, dans lequel les moyens de fixation sont formés par un clip (12) constitué d'au moins un bras support (120,120') terminé par des pattes flexibles (121), le clip étant engagé dans une ouverture formée dans la paroi (1) de la pièce tubulaire.

8. Assemblage d'isolation acoustique selon la revendication précédente, dans lequel les moyens de retenue sont constitués par une pince (11) comportant des crochets (111) qui pénètrent dans la tranche (13).

9. Assemblage d'isolation acoustique selon la revendication 7, dans lequel les moyens de retenue sont constitués de moyens de clippage (31) de forme similaire à celle des moyens de fixation (12').

10. Assemblage d'isolation acoustique selon la revendication 5 ou 8, dans lequel les lames élastiques (210a à 210c) et crochets (111) de la pince (21,11) sont disposés alternativement de part et d'autre de la tranche (13).

11. Assemblage d'isolation acoustique selon la revendication 8 ou 9, dans lequel le couplage entre les moyens de retenue et de fixation est formé par des fourches (110) de support, les crochets et les clips de retenue étant montés sur ces fourches.

12. Assemblage d'isolation acoustique selon la revendication 9, dans lequel il est prévu un détrompage entre les moyens de retenue et de fixation consistant à réaliser des clips de retenue (31) de dimensions sensiblement inférieures à celles des clips de fixation (12').

13. Assemblage d'isolation acoustique selon la revendication précédente, dans lequel il est prévu une tige de connexion (320) entre les clips de retenue (31) et de fixation (12'), de dimension sensiblement inférieure à celui du bras (120') du clip de fixation (12').

14. Assemblage d'isolation acoustique selon l'une quelconque des revendications précédentes, dans lequel le support de tranche est réalisé par moulage d'une préforme métallique.

15. Assemblage d'isolation acoustique selon l'une quelconque des revendications 1 à 12, dans lequel le support de tranche est réalisé par moulage par injection d'un matériau thermoplastique.

16. Assemblage d'isolation acoustique selon l'une quelconque des revendications 1 à 3, dans lequel le support de tranche est formé par une languette d'adhésif (41) ayant les mêmes constituants que la tranche expansible, additionnés d'une résine de type phénolique ou équivalent, les composants étant pris dans des proportions adaptées pour former un matériau flexible et apte à adhérer, à la fois, à la tranche expansible et à la paroi de la pièce tubulaire.

17. Assemblage d'isolation acoustique selon la revendication précédente, dans lequel la languette d'adhésif a soit une forme en « T » (41), par repli sur elle-même, soit une forme en équerre (42), soit une forme de plaquette (43) pour former une jonction entre la tranche expansible (13) et la face interne (1i) de la paroi de la pièce.

18. Assemblage d'isolation acoustique selon la revendication précédente, dans lequel la tranche expansible est soit collée sur le pied (410) de la languette (41) soit encastrée dans ce pied (410').

19. Assemblage d'isolation acoustique selon la revendication 17, dans lequel le collage est réalisé entre la tranche (13) et une (42) ou deux équerres (42,42').

20. Assemblage d'isolation acoustique selon la revendication 17, dans lequel des ergots (51 à 53) de matériau expansible consolident le maintien de la tranche (13) sur la plaquette d'adhésif (43).

21. Assemblage d'isolation acoustique selon l'une quelconque des revendications précédentes, dans lequel le matériau apte à s'expanser thermiquement est composé d'un caoutchouc synthétique vulcanisable du type butyle, butyle halogéné ou nitrile, dans lequel un agent gonflant a été ajouté pour former un mastic, la quantité d'agent gonflant étant fonction du taux d'expansion souhaité.

22. Pièce tubulaire (K), en particulier une pièce de carrosserie automobile, équipée d'au moins un assemblage d'isolation acoustique selon l'une quelconque des revendications précédentes, l'expansion de la tranche (13) par voie thermique s'effectuant au cours de la mise en peinture de la pièce.
